# EUROPÄISCHE PATENTSCHRIFT

(11) **EP 2 496 377 B1**
(45) Veröffentlichungstag und Bekanntmachung des Hinweises auf die Patenterteilung: **25.01.2017**
(21) Anmeldenummer: 10778560.2
(22) Anmeldetag: 02.11.2010
(51) Int. Cl.: B23B 49/00, B23B 51/10

(54) **SENKWERKZEUG**
COUNTERSINKING TOOL
OUTIL D'ALÉSAGE

(30) Priorität: 08.11.2009 DE 102009052104; 04.12.2009 DE 102009056818; 04.04.2010 DE 102010014022
(43) Veröffentlichungstag der Anmeldung: 12.09.2012
(73) Patentinhaber: Gühring OHG, 72458 Albstadt (DE)
(72) Erfinder: LANGE, Jens, Mario, 72461 Albstadt (DE); HARTMANN, Günther, 72458 Albstadt (DE); PUTTKAMER, Ingo von, 72469 Messstetten (DE)
(74) Vertreter: Meitinger, Thomas Heinz
(86) Internationale Anmeldenummer: PCT/EP2010/006667
(87) Internationale Veröffentlichungsnummer: WO 2011/054491

(56) Entgegenhaltungen:
- DE-A1- 10 154 434
- DE-C- 552 110
- DE-C- 931 024
- JP-U- 52 062 579
- JP-U- 62 007 316
- US-A- 3 806 271

## Beschreibung

### GEBIET DER ERFINDUNG

Die vorliegende Erfindung betrifft ein Senkwerkzeug zur spanenden Bearbeitung eines Werkstücks, und ein Verfahren zum Senken eines Werkstücks.

### HINTERGRUND DER ERFINDUNG

Im Stand der Technik sind Anschläge für die spanende Bearbeitung von Werkstücken mit schneidenden Werkzeugen bekannt, um die Eindringtiefe des Werkzeugs in das Werkstück zu begrenzen.

Ein Senkwerkzeug gemäß dem Oberbegriff des Anspruchs 1 ist aus US 3 806 271 bekannt.

### ZUSAMMENFASSUNG DER ERFINDUNG

Beim spanenden Bearbeiten von Werkstücken kann durch Anschläge eine zu tiefe Bearbeitungstiefe verhindert werden. Die Anschläge sind hierbei am spanenden Werkzeug angeordnet. Die Anschläge bewegen sich typischerweise mit dem Werkzeug mit, wodurch bei Aufsetzen des Anschlags auf das Werkstück die Oberfläche des Werkstücks verkratzt werden kann. Ein Verkratzen kann insbesondere bei der Bearbeitung von Werkstücken aus weichen Materialien wie z.B. Aluminium auftreten.

Es kann daher als eine Aufgabe der vorliegenden Erfindung betrachtet werden, ein Senkwerkzeug bereitzustellen, der ein Verkratzen und/oder Schaben an der Oberfläche durch einen Anschlag weitgehend verhindert.

Diese Aufgabe wird in dem unabhängigen Anspruch 1 gelöst. Weitere vorteilhafte Ausgestaltungen der Erfindung ergeben sich aus den Unteransprüchen.

Als erste Ausführungsform der Erfindung wird ein Senkwerkzeug zur Verfügung gestellt, wobei das Senkwerkzeug umfasst: einen schneidenden Abschnitt zum Senken und/oder Entgraten einer Öffnung einer Bohrung nach einem der Ansprüche 1 bis 3.

Der Anschlag am Senkwerkzeug ist derart verstellbar ausgebildet, dass Fasen unterschiedlicher Breite bzw. Durchmesser durch das Senkwerkzeug hergestellt werden können.

Ein Senkwerkzeug dient zum Entgraten und/oder zum Schneiden einer Fase an der Öffnung einer Bohrung. Hierbei sollen sich bevorzugterweise Fasen mit etwa gleichen Durchmessern ergeben. Hierzu kann ein Anschlag dienen. Erfindungsgemäß wird das Senkwerkzeug mit einem Anschlag versehen, auf den die Übertragung des Drehmoments, das auf den arbeitenden, schneidenden Abschnitt des Senkwerkzeugs wirkt, verhindert wird. Ein Anordnen des Anschlags am Senkwerkzeug kann z.B. über ein Wälzlager erfolgen.

Als zweite Ausführungsform der Erfindung wird eine Senkvorrichtung zum Senken und/oder Entgraten einer Öffnung einer Durchgangsbohrung zur Verfügung gestellt, wobei die Senkvorrichtung umfasst: ein Senkwerkzeug zum Senken und/oder Entgraten der Öffnung nach einem der Ansprüche 5 bis 8, wobei das Senkwerkzeug einen ersten Kupplungsabschnitt aufweist und ein Kupplungselement, wobei das Kupplungselement einen zweiten Kupplungsabschnitt aufweist, wobei der erste Kupplungsabschnitt mit dem zweiten Kupplungsabschnitt lösbar verbindbar ist.

Als dritte Ausführungsform der Erfindung wird ein Verfahren zum Senken eines Werkstücks zur Verfügung gestellt, wobei das Verfahren die Schritte umfasst: Senken mittels einer Senkvorrichtung nach Anspruch 4, wobei das Senkwerkzeug mit dem Kupplungselement lösbar verbunden ist, wobei zum Lösen eine Abzugskraft erforderlich ist, wobei beim Senken das Senkwerkzeug gegen das Werkstück mit einer Kraft kleiner als die Abzugskraft gedrückt wird, Umrüsten, wobei das Senkwerkzeug gegen das Werkstück mit einer Kraft größer als die Abzugskraft gedrückt wird.
Beispielhafte Ausfiihrungsformen werden in den abhängigen Ansprüchen beschrieben.

Gemäß einer beispielhaften Ausfuhrungsform wird ein Anschlag zur Verfügung gestellt, wobei das Verbindungselement derart ausgebildet ist, dass der Anschlag drehbar zum Bohr-, Fräs- oder Senkwerkzeug angeordnet ist und/oder wobei das Verbindungselement als Wälzlager ausgebildet ist.

Aufgrund einer frei drehbaren Anordnung des Anschlags am z.B. Senkwerkzeug kann eine Übertragung des Drehmoments, das zur Rotation der Schneiden des Werkzeugs führt, auf den Anschlag vermieden werden.

Eine Ausfiihrungsform des Verbindungselements kann z.B. ein Wälzlager sein, wobei das Wälzlager als Kugellager, Zylinderrollenlager, Nadellager, Kegelrollenlager, Tonnenlager oder Toroidalrollenlager ausgebildet sein kann.

Gemäß einer beispielhaften Ausführungsform wird ein Anschlag zur Verfügung gestellt, wobei der Anschlag als Hülse ausgebildet ist, wobei die Kontaktfläche als Kreisring ausgebildet ist oder wobei der Anschlag stabförmig ausgebildet ist, wobei die Kontaktfläche kreisscheibenförmig ausgebildet ist.
Mit Hilfe einer Hülse als Anschlag kann sicher gestellt werden, dass die Bearbeitungstiefe in das Werkstück auch bei schrägem Anstellwinkel des Werkzeugs nie tiefer als vorgesehen ist. Alternativ kann der Anschlag im Wesentlichen als ein Stab oder mehrere Stäbe ausgebildet sein, wodurch eine einfache Herstellung des Anschlags ermöglicht wird.

Gemäß der vorliegenden Erfindung wird ein Senkwerkzeug zur Verfügung gestellt, wobei das Senkwerkzeug umfasst: einen Kupplungsabschnitt zum lösbaren Verbinden mit einem Kupplungselement zur Übertragung eines Drehmoments auf das Senkwerkzeug.

Gemäß der Erfindung wird ein Senkwerkzeug zur Verfügung gestellt, wobei der Kupplungsabschnitt am dem schneidenden Abschnitt gegenüber liegenden Bereich des Senkwerkzeugs angeordnet ist.

In einer weiteren erfindungsgemäßen Ausführungsform wird ein Senkwerkzeug zur Verfügung gestellt, wobei der Kupplungsabschnitt abschnittsweise als ein Sechskant oder ein Innensechskant ausgebildet ist.

Ein Kupplungsabschnitt, der z.B. als Sechskant oder Innensechskant ausgebildet ist, kann zur Übertragung eines Drehmoments dienen.

Gemäß einem weiteren Ausführungsbeispiel der vorliegenden Erfindung wird ein Senkwerkzeug zur Verfügung gestellt, wobei der Kupplungsabschnitt eine Einschnürung oder eine Nut aufweist.

Eine Einschnürung oder Nut am Kupplungsabschnitt kann z.B. zum Festhalten der zusammengesteckten Teile einer Senkvorrichtung, die ein Senkwerkzeug und ein Kupplungselement umfassen kann, dienen.

Gemäß einer beispielhaften Ausführungsform wird eine Senkvorrichtung zur Verfügung gestellt, wobei der erste Kupplungsabschnitt zumindest abschnittsweise als Sechskant ausgebildet ist und wobei der zweite Kupplungsabschnitt zumindest abschnittsweise als Innensechskant ausgebildet ist.

Als eine Idee der Erfindung kann angesehen werden, ein Werkzeug zur spanenden Bearbeitung mit einem Anschlag zur Verfügung zu stellen, das derart gestaltet ist, dass das Drehmoment, das auf den schneidenden Abschnitt des Werkzeugs aufgebracht wird, nicht auf den Anschlag übertragen werden kann. Diese mechanische Entkopplung kann z.B. durch ein Wälzlager vorgenommen werden.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
- Fig. 1: ein Senkwerkzeug,
- Fig. 2: ein weiteres Senkwerkzeug teils im Längsschnitt, teils in der Seitenansicht,
- Fig. 3: ein weiteres Senkwerkzeug im Längsschnitt,
- Fig. 4: eine Senkvorrichtung,
- Fig. 5: ein weiteres Senkwerkzeug,
- Fig. 6: eine Kugel,
- Fig. 7: ein Kupplungselement,
- Fig. 8: eine Senkvorrichtung,
- Fig. 9: ein Kupplungselement,
- Fig. 10: ein weiteres Senkwerkzeug,
- Fig. 11: ein weiteres Senkwerkzeug.

### DETAILLIERTE BESCHREIBUNG BEISPIELHAFTER AUSFÜHRUNGSFORMEN

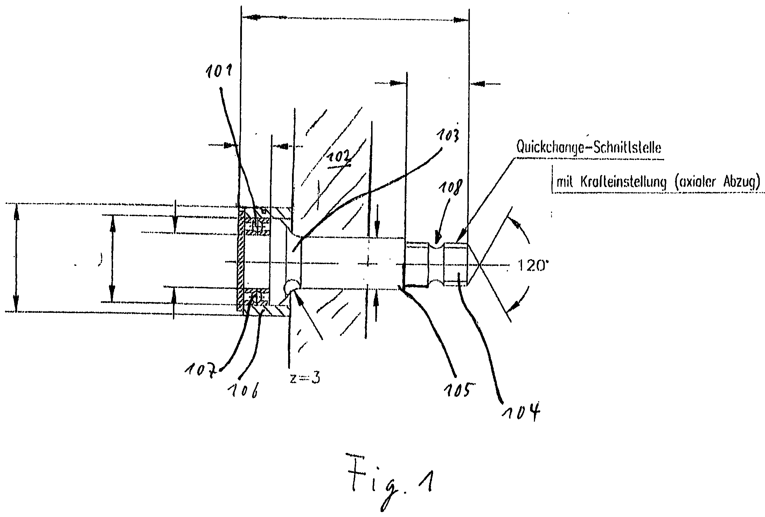

Fig. 1 zeigt ein Senkwerkzeug 105 zum Senken und/oder Entgraten mit einem schneidenden Abschnitt 103 und einem Anschlag 106, der als Hülse ausgebildet sein kann. Alternativ kann der Anschlag auch als ein oder mehrere Stäbe ausgestaltet sein. Der Anschlag 106 ist Teil des Senkwerkzeugs 105 und bewegt sich daher eventuell mit dem angetriebenen schneidenden Abschnitt 103 mit. Sitzt der Anschlag 106 bei Erreichen der vorgesehenen Bearbeitungstiefe auf der Oberfläche des Werkstücks 102 auf, kommt der Anschlag 106 erfindungsgemäß zum Stillstand, da zwischen dem angetriebenen schneidenden Abschnitt 103 und dem Anschlag 106 mindestens ein Wälzlager 101, 107 angeordnet ist, das eine Übertragung eines Drehmoments vom angetriebenen schneidenden Abschnitt 103 zum Anschlag 106 verhindert. Hierdurch kann vermieden werden, dass der Anschlag 106 beim Kontakt mit der Oberfläche des Werkstücks 102 weiter dreht und hierdurch die Oberfläche des Werkstücks 102 verkratzt. Das Werkstück 102 kann z.B. aus Aluminium, CFK oder Titan bestehen bzw. Aluminium, CFK oder Titan enthalten. Das Senkwerkzeug 105 umfasst einen Kupplungsabschnitt 104, der z.B. als Zapfen ausgeformt sein kann. Mit Hilfe dieses Kupplungsabschnitts 104 kann das Senkwerkzeug 105 angetrieben werden. Der Kupplungsabschnitt 104 kann z.B. als Sechskant ausgebildet sein, wodurch ein Drehmoment übertragen werden kann. Der Kupplungsabschnitt 104 kann alternativ auch als Ausnehmung, z.B. als Innensechskant, ausgebildet sein.

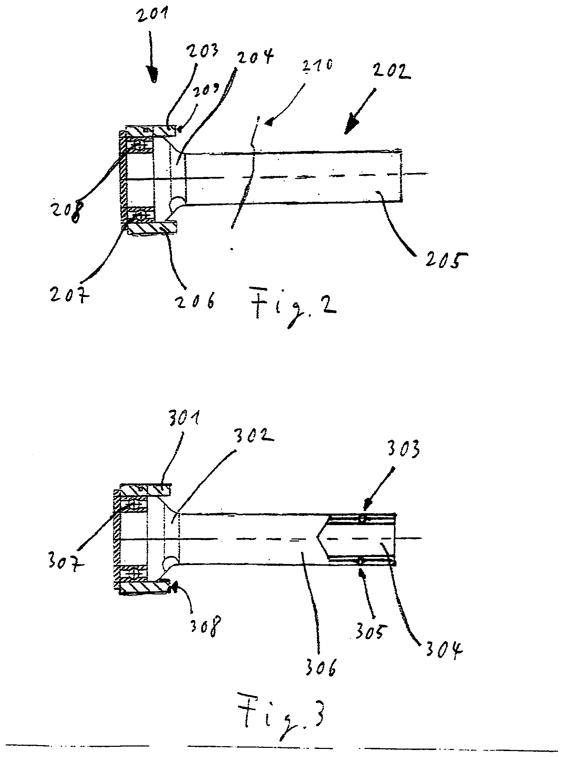

Fig. 2 zeigt ein Senkwerkzeug 205, das in einem ersten Abschnitt 201 im Längsschnitt und in einem zweiten Abschnitt 202 in einer Seitenansicht dargestellt ist. Das Senkwerkzeug 205 weist einen Anschlag 203, 206 auf, das vom angetriebenen schneidenden Abschnitt 204 über mindestens ein Wälzlager 207, 208 getrennt ist. Sitzt der Anschlag 203, 206 mit seiner Kontaktfläche 209 auf dem zu senkenden und/oder zu entgratenden Werkstück auf, kommt der Anschlag 203, 206 zur Ruhe, wodurch ein Schaben bzw. Kratzen auf z.B. einer weichen Aluminium-Oberfläche des Werkstücks vermieden werden kann. Der Anschlag 203, 206 kann auch, statt als rund umlaufend ausgeformte Hülse, als ein Anschlag bestehend aus einem Stab 203, zwei Stäben 203, 206 oder umfassend mehr als zwei Stäbe ausgebildet sein, wobei erfindungsgemäß der Anschlag 203, 206, sei er als Hülse oder als ein oder mehrere Stäbe oder in einer sonstigen Ausführungsforrn ausgebildet, stets vom angetriebenen schneidenden Abschnitt 204 des Senkwerkzeugs 205 durch mindestens ein Wälzlager 207, 208 getrennt ist. Hierdurch wird sicher gestellt, dass der Anschlag 203, 206 bei Kontakt mit der Oberfläche des Werkstücks zum Stillstand kommt, wodurch ein Schaben oder Kratzen auf der Oberfläche des Werkstücks weitgehend vermieden werden kann.

Fig. 3 zeigt ein Senkwerkzeug 306 im Längsschnitt mit einem Anschlag 301 und einem schneidenden Abschnitt 302, wobei der Anschlag 301 mit dem schneidenden Abschnitt 302 mittels mindestens eines Wälzlagers 307 verbunden ist. Sitzt das Senkwerkzeug 306 mit seiner Kontaktfläche 308 auf einer Werkstückoberfläche auf, kommt der Anschlag 301 daher zum Stillstand. Das Senkwerkzeug 306 weist eine Ausnehmung 304 auf, die z.B. als Innensechskant ausgebildet sein kann. In diese Ausnehmung kann ein komplementärer Zapfen eingeführt werden, der z.B. eine Einschnürung aufweisen kann. In diese Einschnürung können z.B. Kugeln 303, 305 z.B. durch eine Federkraft eingepresst werden, wodurch ein Ankoppeln des Senkwerkzeugs 306 an eine antreibende Maschine erzielt werden kann. Das Senkwerkzeug 306 kann alternativ in einer Ausführungsform mit nur einer Kugel 303 oder drei, vier oder beliebig vielen Kugeln ausgebildet sein.

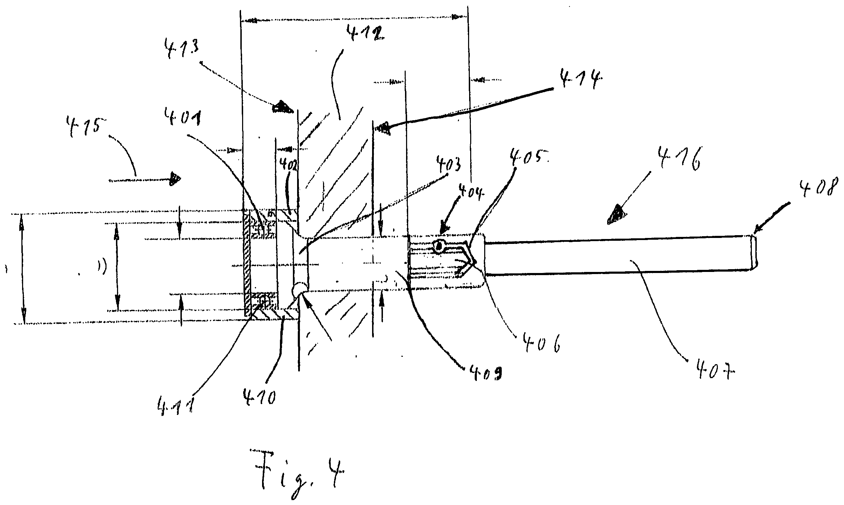

Fig. 4 zeigt eine Senkvorrichtung mit einem Senkwerkzeug 409 und einem Kupplungselement 416, wobei das Senkwerkzeug 409 einen schneidenden Abschnitt 403 und einen Anschlag 402, 410 aufweist. Beim Aufsetzen des Anschlags 402, 410 auf die Oberfläche 413 des Werkstücks 412 verhindert der Anschlag 402, 410 ein weiteres Einschneiden des Senkwerkzeugs 409 in das Werkstück 412. Aufgrund der Reibung zwischen dem Anschlag 402, 410 und dem Werkstück 412 und wegen dem Wälzlager 401, 411 zwischen dem angetriebenen schneidenden Abschnitt 403 und dem Anschlag 402, 410 kommt der Anschlag 402, 410 zur Ruhe, wodurch ein Beschädigen der Oberfläche 413 des Werkstücks 412 vermieden wird. Das Senkwerkzeug 409 kann mit einem Kupplungselement 416 lösbar verbunden werden, wobei das Senkwerkzeug 409 einen Kupplungsabschnitt aufweisen kann, der als Zapfen 406 ausgebildet sein kann. Dieser Zapfen 406 des Senkwerkzeugs 409 kann in eine Ausnehmung 405 des Kupplungselements 416 eingeführt werden. Hierbei kann eine Kugel 404 des Kupplungselements 416 in die Einschnürung des Zapfens 406 eingepresst werden, wodurch eine Arretierung erzielt wird. Das Kupplungselement 416 weist einen Schaft 407 auf, der zum Einspannen in eine antreibende Maschine, z.B. Handbohrmaschine, dienen kann. Der Schaft 407 weist eine Fase 408 auf, um das Einführen des Schaftes in das Bohrfutter zu erleichtern.

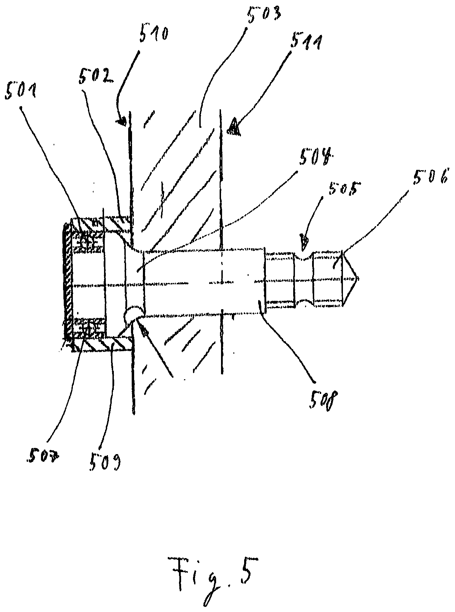

Fig. 5 zeigt ein Senkwerkzeug 508 mit einem schneidenden Abschnitt 504 und einem Anschlag 502, 509, wobei der Anschlag 502, 509 mit dem schneidenden Abschnitt 504 des Senkwerkzeugs 508 via mindestens einem Wälzlager 501, 507 verbunden ist. Das Senkwerkzeug 508 kann auf der ersten Oberfläche 510 des Werkstücks 503 mittels des schneidenden Abschnitts 504 eine Fase schneiden. Das Senkwerkzeug 508 weist einen Zapfen 506 auf, der als Sechskant ausgebildet sein kann. Der Zapfen 506 dient zum Übertragen eines Drehmoments auf das Senkwerkzeug 508.

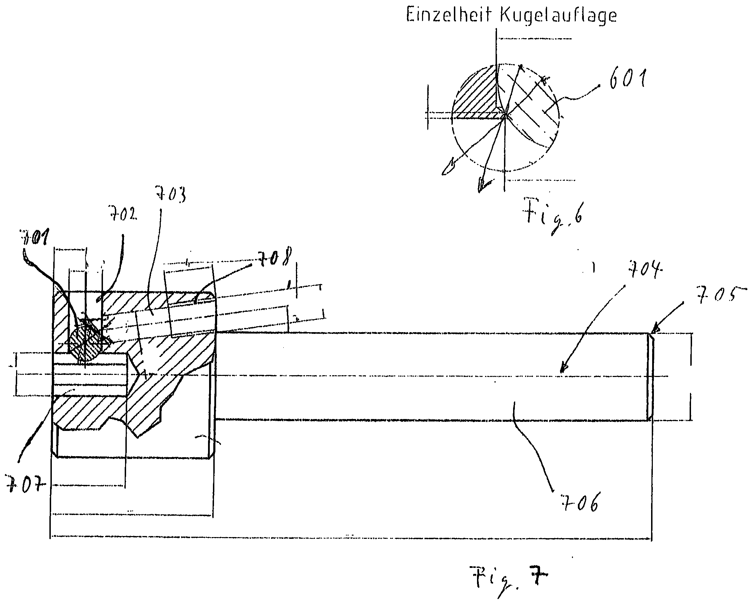

Fig. 6 zeigt eine Kugel 601, die in eine Einschnürung eines Zapfens eingepresst werden kann, um eine Arretierung des Zapfens in einer Aufnahme zu erzielen.

Fig. 7 zeigt ein Kupplungselement, das eine Aufnahme 707 aufweist, wobei die Aufnahme 707 zur Übertragung eines Drehmoments als Innensechskant ausgebildet sein kann. Zum Arretieren eines eingeführten Zapfens kann eine Kugel 701 genutzt werden, die in das Kupplungselement über den Kanal 702 eingebracht werden kann. Das Kupplungselement weist einen weiteren Kanal 703 auf, in den ein Bolzen eingebracht werden kann, der auf die Kugel einwirkt, wodurch die Kugel 701 daran gehindert wird, das Kupplungselement über den Kanal 702 zu verlassen. Hinter dem Bolzen innerhalb des Kanals 703 kann eine Feder angeordnet werden, die den Bolzen nach links unten drückt. Der Kanal 703 weist an seinem äußeren Ende ein Innengewinde 708 auf, wodurch ein Gewindebolzen in den Kanal 703 eingeschraubt werden kann. Der Gewindebolzen kann unterschiedlich tief in den Kanal 703 eingeschraubt werden, wodurch der Druck der Feder auf den Bolzen variiert werden kann. Insgesamt kann hierdurch der Anpressdruck der Kugel 701 auf einen eingeführten Zapfen variiert werden. Vorteilhafterweise weist der Kanal 702 an seinem unteren Bereich einen geringeren Durchmesser auf als die Kugel, wodurch ein nach unten Herausfallen der Kugel 701 bei abgezogenem Zapfen vermieden werden kann.

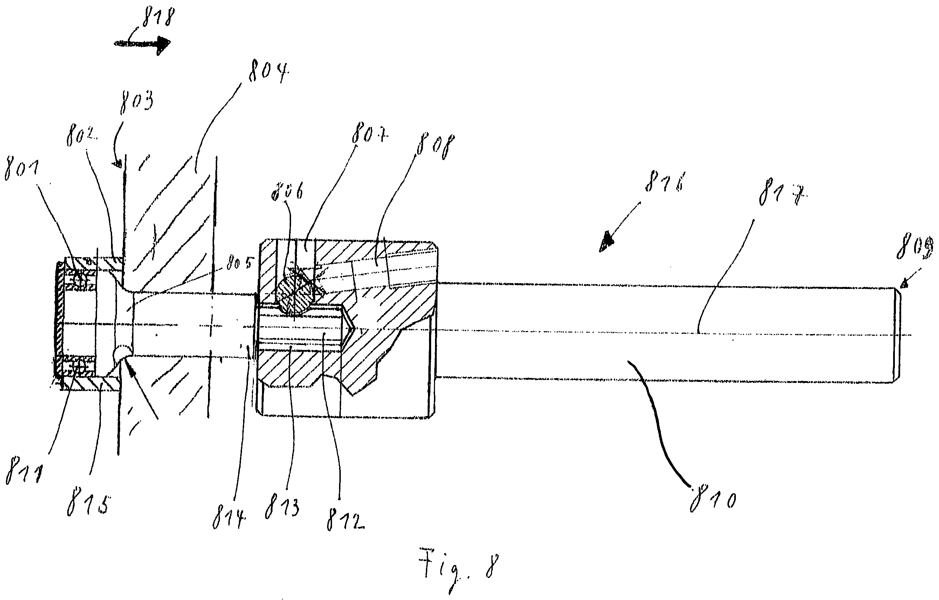

Fig. 8 zeigt eine Senkvorrichtung mit einem Senkwerkzeug 814, das einen Anschlag 802, 815 aufweist, der über ein Wälzlager 801, 811 mit einem schneidenden Abschnitt 805 verbunden ist. Das Senkwerkzeug 814 ist mit einem Kupplungselement 816 lösbar verbunden. Die Verbindung wird über einen Zapfen 812, der in eine Ausnehmung 813 einführbar ist, erzielt, wobei der Zapfen 812 als Sechskant und die Ausnehmung 813 als Innensechskant ausgebildet sein kann, um ein Drehmoment vom Kupplungselement 816 auf das Senkwerkzeug 814 zu übertragen. Das Kupplungselement 816 weist einen Kanal 807 zum Einführen einer Kugel 806 in das Kupplungselement 816 auf sowie einen Kanal 808, der eine Bolzen/Feder/Gewindebolzen-Anordnung aufnehmen kann, um einen Anpressdruck auf die Kugel 806 hervorzurufen. Das Kupplungselement 816 weist einen Schaft 810 auf, wodurch das Kupplungselement 816 in das Bohrfutter z.B. einer Handbohrmaschine eingespannt werden kann.

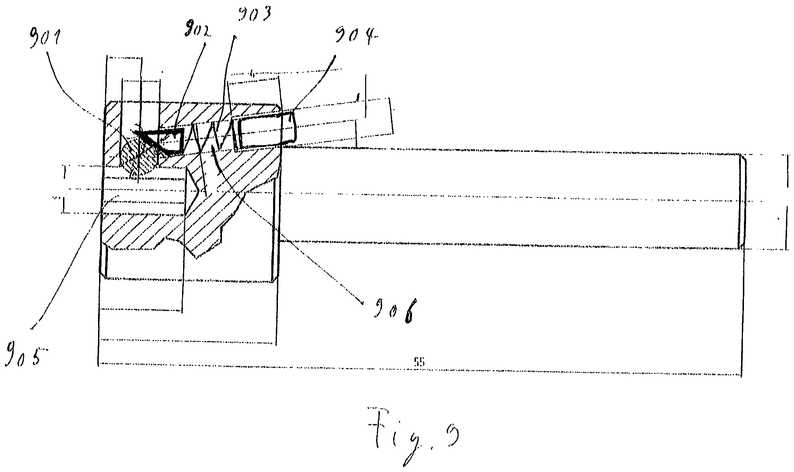

Fig. 9 zeigt ein Kupplungselement mit einer Kugel 901, um in die Einschnürung eines eingeführten Zapfens einzugreifen. Die Kugel 901 wird von einem Bolzen 902 in Richtung der Ausnehmung gepresst, wobei der Bolzen 902 keilförmig ausgebildet sein kann. Der Bolzen 902 wird von einer Feder 903 gegen die Kugel 901 gepresst, wobei die Federkraft durch einen Gewindebolzen 904 variiert werden kann, der unterschiedlich tief in den Kanal eingeschraubt werden kann. Insgesamt kann hierdurch der Anpressdruck des Bolzens 902 auf die Kugel 901 variiert werden. Wird der Gewindebolzen 904 tiefer in den Kanal 906 eingeschraubt, erhöht sich der Anpressdruck des Bolzens 902 auf die Kugel 901. Wird der Gewindebolzen 904 weiter herausgeschraubt, wird der Bolzen 902 mit einer geringeren Kraft gegen die Kugel 901 gedrückt. Durch eine Variation der Kraft auf die Kugel 901 kann die Kraft verändert werden, die benötigt wird, um einen Zapfen in die Ausnehmung 905 einzuführen bzw. wieder herauszuziehen, diese Kraft kann auch als Abzugskraft bezeichnet werden.

Fig. 8 zeigt ein Senkwerkzeug 814, das mit einem Kupplungselement 816 lösbar verbunden ist, wobei das Senkwerkzeug 814 eine Fase in das Werkstück 804 durch Verfahren der Senkvorrichtung in Richtung des Pfeils 818 schneidet. Hierbei muss sicher gestellt sein, dass die Kraft mit der das Senkwerkzeug 814 gegen die Oberfläche 803 gepresst wird, um die Fase zu schneiden, geringer ist als die Abzugskraft, damit ein Abziehen, also Lösen des Senkwerkzeugs 814 von dem Kupplungselement 816 während des Senkvorgangs vermieden wird. Nach Beendigung des Senkvorgangs kann die Kraft erhöht werden mit der das Senkwerkzeug 814 gegen die Oberfläche 803 des Werkstücks 804 in Richtung des Pfeils 818 gedrückt wird bis sie größer als die Abzugskraft ist, um hierdurch das Senkwerkzeug 814 vom Kupplungselement 816 zu lösen, wodurch ein Umrüstvorgang eingeleitet werden kann. Die Einstellung der Kraft mit der die Kugel 806 gegen den Zapfen 812 drückt, muss daher derart eingestellt werden, dass der Senkvorgang ohne Lösen des Senkwerkzeugs 814 durchgeführt werden kann. Andererseits sollte die Kraft nicht zu groß eingestellt werden, um ein Umrüsten durch Abziehen des Senkwerkzeugs 814 durch Drücken gegen das Werkstück 804 zu ermöglichen.

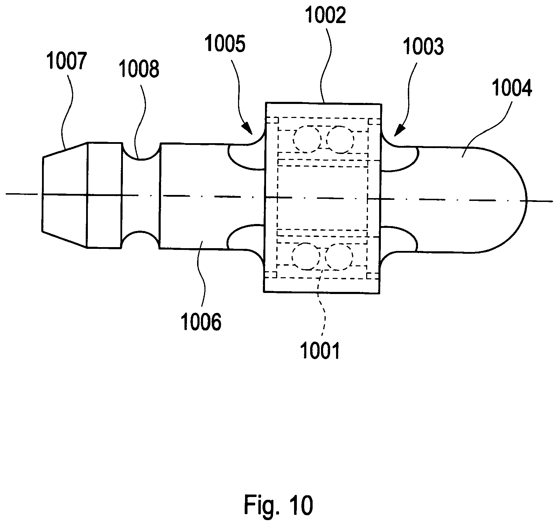

Fig. 10 zeigt ein Senkwerkzeug mit einem Zapfen 1006, der als Sechskant ausgebildet sein kann, wobei der Sechskant einen Einstich bzw. Einschnürung 1008 aufweisen kann, um mit einem weiteren Werkzeugelement (nicht gezeigt) gekuppelt werden zu können (Quickchangeadapter). Das weitere Werkzeugelement kann dabei für den Antrieb des Senkwerkzeugs sorgen. Ferner ist an dem Senkwerkzeug ein Wälzlager 1001 angeordnet, das als zweireihiges Schrägkugellager ausgeformt sein kann, wobei das Schrägkugellager verspannt und daher spielfrei ausgebildet sein kann. Ferner kann der Innenring die Zapfen beider Senker aufnehmen (z.B. Klebung mit Loctite). Das Senkwerkzeug kann eine Hülse 1002 umfassen, wobei die Hülse 1002 mit dem restlichen Senkwerkzeug über das Wälzlager 1001 verbunden sein kann, wodurch eine Übertragung eines Drehmoments z.B. von dem Zapfen 1006 auf die Hülse 1002 verhindert werden kann. Die Hülse 1002 kann als Tiefenanschlag dienen und dreht dank des Wälzlagers 1001 bei Aufsetzen auf eine Oberfläche eines zu bearbeitenden Werkstücks nicht weiter, wodurch die Oberfläche des Werkstücks geschont werden kann. Die Hülse 1002 kann mit dem Wälzlager 1001 z.B. verklebt werden. Das Senkwerkzeug weist einen sich verjüngenden Abschnitt 1007 auf, wodurch ein Einfädeln des Senkwerkzeugs in das weitere Werkzeugelement erleichtert werden kann. Das Senkwerkzeug kann als Rückwärtssenker und/oder als Vorwärtssenker genutzt werden, wobei beim Rückwärtssenken ein erster schneidender Abschnitt 1005 zum Senken verwendet werden kann und wobei beim Vorwärtssenken ein zweiter schneidender Abschnitt 1003 zum Senken verwendet werden kann. Das Senkwerkzeug kann in einer alternativen Ausführungsform einen abgerundeten Zapfen 1004 aufweisen, wodurch ein Einfädeln in eine zu senkende Bohrung eines Werkstücks erleichtert werden kann und wodurch die Oberfläche des Werkstücks während des Einfädelns geschont werden kann.

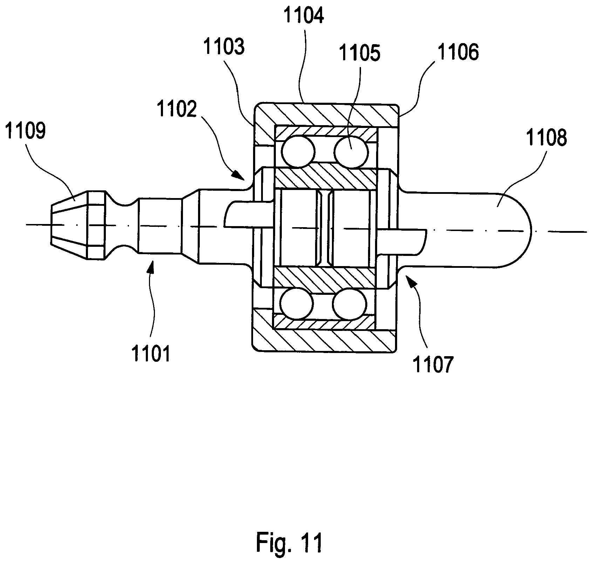

Fig. 11 zeigt ein Senkwerkzeug mit einem Zapfen 1101 zum Kuppeln mit einem antreibenden Werkzeugelement (nicht gezeigt), wobei der Zapfen 1101 einen sich verjüngenden Abschnitt 1109 aufweisen kann, der zum leichteren Einfädeln in das antreibende Werkzeugelement dienen kann. Das Senkwerkzeug weist einen ersten schneidenden Abschnitt 1102 auf, der zum Rückwärtssenken geeignet ausgebildet ist. Ferner kann das Senkwerkzeug einen zweiten schneidenden Abschnitt 1107 aufweisen, der zum Vorwärtssenken geeignet ausgeformt sein kann. An dem Senkwerkzeug ist eine Hülse 1104, die als Aluminiumgehäuse ausgeformt sein kann, vorgesehen, die mit dem restlichen Senkwerkzeug über ein Wälzlager 1105 verbunden sein kann. Das Wälzlager 1105 kann als Schrägkugellager ausgebildet sein. Die Hülse 1104 kann zwei Anschläge 1103, 1106 aufweisen, wobei der Anschlag 1103 für das Rückwärtssenken vorgesehen ist und wobei der Anschlag 1106 für das Vorwärtssenken vorgesehen ist. Beim Rückwärtssenken kann ein schneidender Abschnitt 1102 verwendet werden und beim Vorwärtssenken kann ein weiterer schneidender Abschnitt 1107 verwendet werden, um den Senkvorgang durchführen zu können. Die Hülse 1104 kann derart angepasst werden, z.B. nach ihrer Montage an dem Senkwerkzeug, dass die schneidenden Abschnitte 1102, 1107 wunschgemäß tief in eine zu senkende Bohrung eines zu bearbeitenden Werkstücks schneiden können. Zum Einfädeln beim Vorwärtssenken kann ein Zapfen 1108 genutzt werden. In einer alternativen Ausführungsform kann der Zapfen 1108 abgerundet sein, um beim Einfädeln des Vorwärtssenkers ein Verkratzen bzw. Beschädigen einer Oberfläche eines zu bearbeitenden Werkstücks vermeiden zu können.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 101: Wälzlager
- 102: Werkstück
- 103: schneidender Abschnitt
- 104: Kupplungsabschnitt
- 105: Senkwerkzeug
- 106: Anschlag
- 107: Wälzlager
- 108: Einschnürung
- 201: Senkwerkzeug im Längsschnitt
- 202: Senkwerkzeug in der Seitenansicht
- 203: Anschlag
- 204: schneidender Abschnitt
- 205: Senkwerkzeug
- 206: Anschlag
- 207: Wälzlager
- 208: Wälzlager
- 209: Kontaktfläche
- 210: Bruchlinie
- 301: Anschlag
- 302: schneidender Abschnitt
- 303: Kugel zum Einrasten
- 304: Ausnehmung
- 305: Kugel zum Einrasten
- 306: Senkwerkzeug
- 307: Wälzlager
- 308: Kontaktfläche
- 401: Wälzlager
- 402: Anschlag
- 403: schneidender Abschnitt
- 404: Kugel zum Einrasten
- 405: Ausnehmung
- 406: Kupplungsabschnitt
- 407: Schaft
- 408: Fase
- 409: Senkwerkzeug
- 410: Anschlag
- 411: Wälzlager
- 412: Werkstück
- 413: erste Oberfläche des Werkstücks
- 414: zweite Oberfläche des Werkstücks
- 415: Verfahrrichtung
- 416: Kupplungselement
- 501: Wälzlager
- 502: Anschlag
- 503: Werkstück
- 504: schneidender Abschnitt
- 505: Einschnürung
- 506: Kupplungsabschnitt
- 507: Wälzlager
- 508: Senkwerkzeug
- 509: Anschlag
- 510: erste Oberfläche des Werkstücks
- 511: zweite Oberfläche des Werkstücks
- 601: Kugel
- 701: Kugel
- 702: Kanal
- 703: Kanal
- 704: Mittellinie
- 705: Fase
- 706: Schaft
- 707: Ausnehmung
- 708: Innengewinde
- 801: Wälzlager
- 802: Anschlag
- 803: Oberfläche Werkstück
- 804: Werkstück
- 805: schneidender Abschnitt
- 806: Kugel
- 807: Kanal
- 808: Kanal
- 809: Fase
- 810: Schaft
- 811: Wälzlager
- 812: Kupplungsabschnitt
- 813: Ausnehmung
- 814: Senkwerkzeug
- 815: Anschlag
- 816: Kupplungselement
- 817: Mittellinie
- 818: Verfahrrichtung
- 901: Kugel
- 902: Bolzen
- 903: Feder
- 904: Gewindebolzen
- 905: Ausnehmung
- 906: Kanal
- 1001: Wälzlager
- 1002: Hülse
- 1003: schneidender Abschnitt
- 1004: Zapfen
- 1005: schneidender Abschnitt
- 1006: Zapfen
- 1007: Abschnitt des Zapfens
- 1008: Einstich
- 1101: Zapfen
- 1102: schneidender Abschnitt
- 1103: Anschlag
- 1104: Hülse
- 1105: Wälzlager
- 1106: Anschlag
- 1107: schneidender Abschnitt
- 1108: Zapfen
- 1109: Abschnitt des Zapfen

## Patentansprüche

1. Senkwerkzeug (409,508) wobei das Senkwerkzeug (409, 508) umfasst
einen schneidenden Abschnitt (504, 1005) zum Rückwärtssenken und/oder Rückwärtsentgraten einer Öffnung einer Bohrung und
einen Anschlag (502, 509) zur Anordnung an einem Bohr-, Fräs- oder Senkwerkzeug (409,508) zur spanenden Bearbeitung eines Werkstücks (412,503), wobei das Werkstück (412, 503) eine Oberfläche (510) aufweist, wobei das Bohr-, Fräs- oder Senkwerkzeug (409, 508) einen schneidenden Abschnitt (504, 1005) aufweist, wobei der Anschlag (502, 509) umfasst eine Kontaktfläche, und ein Verbindungselement, wobei das Verbindungselement zwischen der Kontaktfläche und dem schneidenden Abschnitt (504, 1005) angeordnet ist, wobei das Verbindungselement geeignet ist, eine Relativbewegung zwischen der Kontaktfläche und der Oberfläche (510) zu vermeiden, wobei das Senkwerkzeug (409, 508) umfasst
einen Kupplungsabschnitt (406, 506) zum lösbaren Verbinden mit einem Kupplungselement (416) zur Übertragung eines Drehmoments auf das Senkwerkzeug (409, 508) und
wobei der Kupplungsabschnitt (406, 506) am dem schneidenden Abschnitt (504) gegenüber liegenden Bereich des Senkwerkzeugs (409, 508) angeordnet ist, **dadurch gekennzeichnet, dass** die Kontaktfläche derart angeordnet ist, dass die Kontaktfläche bei Erreichen einer vorgegebenen Bearbeitungstiefe am Werkstück (412, 503) an der Oberfläche zumindest abschnittsweise anliegend ist.

2. Senkwerkzeug (508, 814) nach Anspruch 1, umfassend einen zweiten schneidenden Abschnitt (1003) zum Vorwärtssenken und/oder Vorwärtsentgraten einer Öffnung der Bohrung.

3. Senkwerkzeug (508) nach einem der vorhergehenden Ansprüche, wobei der Kupplungsabschnitt (506) abschnittsweise als ein Sechskant oder ein Innensechskant ausgebildet ist und/oder wobei der Kupplungsabschnitt (506) eine Einschnürung (505) oder eine Nut aufweist.

4. Senkvorrichtung zum Senken und/oder Entgraten einer Öffnung einer Durchgangsbohrung, wobei die Senkvorrichtung umfasst
ein Senkwerkzeug (409) zum Senken und/oder Entgraten der Öffnung nach einem der vorhergehenden Ansprüche, wobei das Senkwerkzeug (409) einen ersten Kupplungsabschnitt (406) aufweist und
ein Kupplungselement (416), wobei das Kupplungselement (416) einen zweiten Kupplungsabschnitt (405) aufweist, wobei der erste Kupplungsabschnitt (406) mit dem zweiten Kupplungsabschnitt (405) lösbar verbindbar ist.

5. Verfahren zum Senken eines Werkstücks (412),
wobei das Verfahren die Schritte umfaßt Senken mittels einer Senkvorrichtung nach Anspruch 4,
wobei das Senkwerkzeug (409) mit dem Kupplungselement (416) lösbar verbunden ist, wobei zum Lösen eine Abzugskraft erforderlich ist, wobei beim Senken das Senkwerkzeug (409) gegen das Werkstück (412) mit einer Kraft kleiner als die Abzugskraft gedrückt wird, Umrüsten, wobei das Senkwerkzeug (409) gegen das Werkstück (412) mit einer Kraft größer als die Abzugskraft gedrückt wird.

## Claims

1. Countersinking tool (409, 508), wherein the countersinking tool (409, 508) comprises a cutting portion (504, 1005) for reverse countersinking and/or reverse deburring of an opening of a bore, and a stop (502, 509) for arranging against a drilling, milling or countersinking tool (409, 508) for machining a workpiece (412, 503), wherein the workpiece (412, 503) has a surface (510), wherein the drilling, milling or countersinking tool (409, 508) has a cutting portion (504, 1005), wherein the stop (502, 509) comprises a contact face and a connecting element, wherein the connecting element is arranged between the contact face and the cutting portion (504, 1005), wherein the connecting element is suitable for avoiding a relative movement between the contact face and the surface (510), wherein the countersinking tool (409, 508) comprises a coupling portion (406, 506) for releasably connecting to a coupling element (416) for transmitting a torque to the countersinking tool (409, 508), and wherein the coupling portion (406, 506) is arranged in that region of the countersinking tool (409, 508) that is located on the opposite side from the cutting portion (504), **characterized in that** the contact face is arranged such that at least part of the contact face bears against the surface when a predetermined machining depth in the workpiece (412, 503) is reached.

2. Countersinking tool (508, 814) according to Claim 1, comprising a second cutting portion (1003) for forward countersinking and/or forward deburring of an opening of the bore.

3. Countersinking tool (508) according to either of the preceding claims, wherein part of the coupling portion (506) is configured as a hexagon or a hexagon socket, and/or wherein the coupling portion (506) has a constriction (505) or a groove.

4. Countersinking device for countersinking and/or deburring an opening of a throughbore, wherein the countersinking device comprises
a countersinking tool (409) for countersinking and/or deburring the opening according to one of the preceding claims, wherein the countersinking tool (409) has a first coupling portion (406), and
a coupling element (416), wherein the coupling element (416) has a second coupling portion (405), wherein the first coupling portion (406) is releasably connectable to the second coupling portion (405).

5. Method for countersinking a workpiece (412), wherein the method comprises the steps of:
countersinking by means of a countersinking device according to Claim 4, wherein the countersinking tool (409) is connected releasably to the coupling element (416), wherein a pull-off force is required for releasing, wherein, during countersinking, the countersinking tool (409) is pressed against the workpiece (412) with a force less than the pull-off force,
changeover, wherein the countersinking tool (409) is pressed against the workpiece (412) with a force greater than the pull-off force.

## Revendications

1. Outil d'alésage (409, 508), l'outil d'alésage (409, 508) comprenant
une partie coupante (504, 1005) pour l'alésage arrière et/ou l'ébavurage arrière d'une ouverture d'un trou et
une butée (502, 509) devant être disposée sur un outil de perçage, de fraisage ou d'alésage (409, 508) pour l'usinage par enlèvement de copeaux d'une pièce (412, 503), la pièce (412, 503) présentant une surface (510), l'outil de perçage, fraisage ou alésage (409, 508) présentant une partie coupante (504, 1005), la butée (502, 509) comprenant une surface de contact, et
un élément de connexion, l'élément de connexion étant disposé entre la surface de contact et la partie coupante (504, 1005), l'élément de connexion étant prévu pour éviter un mouvement relatif entre la surface de contact et la surface (510), l'outil d'alésage (409, 508) comprenant une partie d'accouplement (406, 506) pour la connexion amovible à un élément d'accouplement (416) pour le transfert d'un couple à l'outil d'alésage (409, 508) et la partie d'accouplement (406, 506) étant disposée au niveau de la région de l'outil d'alésage (409, 508) opposée à la partie coupante (504), **caractérisé en ce que** la surface de contact est disposée de telle sorte que la surface de contact, à l'obtention d'une profondeur d'usinage prédéfinie sur la pièce (412, 503), s'applique au moins en partie contre la surface.

2. Outil d'alésage (508, 814) selon la revendication 1, comprenant une deuxième partie coupante (1003) pour l'alésage avant et/ou l'ébavurage avant d'une ouverture du trou.

3. Outil d'alésage (508) selon l'une quelconque des revendications précédentes, dans lequel la partie d'accouplement (506) est réalisée en partie avec un profil à six pans ou à six pans creux et/ou dans lequel la partie d'accouplement (506) présente un rétrécissement (505) ou une rainure.

4. Dispositif d'alésage pour l'alésage et/ou l'ébavurage d'une ouverture d'un trou de passage, le dispositif d'alésage comprenant
un outil d'alésage (409) pour l'alésage et/ou l'ébavurage de l'ouverture selon l'une quelconque des revendications précédentes, l'outil d'alésage (409) présentant une première partie d'accouplement (406), et
un élément d'accouplement (416), l'élément d'accouplement (416) présentant une deuxième partie d'accouplement (405), la première partie d'accouplement (406) pouvant être connectée de manière amovible à la deuxième partie d'accouplement (405).

5. Procédé d'alésage d'une pièce (412), le procédé présentant les étapes suivantes :
alésage au moyen d'un dispositif d'alésage selon la revendication 4, l'outil d'alésage (409) étant connecté de manière amovible à l'élément d'accouplement (416), une force de traction étant nécessaire pour le desserrage, l'outil d'alésage (409), lors de l'alésage, étant pressé contre la pièce (412) avec une force inférieure à la force de traction,
rajustement, l'outil d'alésage (409) étant pressé contre la pièce (412) avec une force supérieure à la force de traction.
